# EUROPEAN PATENT APPLICATION

(11) **EP 2 907 775 A1**
(43) Date of publication of application: **19.08.2015**
(21) Application number: 14000537.2
(22) Date of filing: 14.02.2014
(51) Int. Cl.: B65G 23/22

(54) **Mining conveyor belt drive system**

(71) Applicant: ABB Technology AG, 8050 Zürich (CH)
(72) Inventor: Rathmann, Boris, 03046 Cottbus (DE); Richter, Ulf, 03048 Cottbus (DE)
(74) Representative: Kock, Ina

(57) **Abstract**

The invention is related to a mining conveyor belt drive system (30, 70) comprising at least one cylinder-like driving pulley (32, 72) with a shaft (34) and respective bearings (36, 38) on both sides for driving a conveyor belt (78). It further comprises at least one respective low speed permanent-magnet excited synchronous motor (10, 48, 50, 74) on one or both ends of the shaft (34), which each is equipped to directly drive the shaft (34) without any gear transmission inbetween, wherein the at least one respective permanent-magnet excited synchronous motor (10, 48, 50, 74) is shaft-mounted with a respective torque-arm so that further bearings of the shaft are avoided.

## Description

The invention is related to a mining conveyor belt drive system comprising at least one cylinder-like driving pulley with a shaft and respective bearings on both sides for driving a conveyor belt.

It is known that in mining industry, for example for coal or ore, large conveyor belts are used to transport bulk material from the mining location to another location, for example for further storage. Such conveyor belts or conveyor belt systems might have a length of several kilometers and the rated power of their drives might amount several megawatts. Conveyor belt systems can become cascaded if the required transportation distance is too high. A conveyor belt is arranged circular and normally driven by at least one driving pulley, which is surrounded for example by 180° from a respective section of the conveyor belt around its rotational axis.

A driving pulley can be driven by respective single or multiple motors. The required rotational speed of a driving pulley depends on its diameter and the desired movement speed of the conveyor belt. Typical rotation speeds are for example within a range of 40rpm to 100rpm. Since the rated rotational speed of standard motors is significant higher, typically a gearbox or gear transmission inbetween motor shaft and the shaft of the driving pulley are foreseen. In order to reduce the effort for such a gear transmission motors with a lower rated rotation speed are a preferred solution. In comparison to asynchronous motors synchronous motors are also well controllable in lower speed ranges since no slip is required inbetween their rotor and stator. Typically a frequency variable rectifier is foreseen to generate a controllable voltage for the stator winding of the synchronous motor.

A driving pulley is typically located at the upper end of a conveyor belt system to gain a better traction. Dependent on the respective frame conditions it might be required to mount the driving pulley respectively a respective driving motor on a support structure to elevate respectively raise the drive system above ground level.

Some conveyor belt systems have to become moved or modified from time to time, since also the pit or feeding devices are moving. Thus also a support structure has to be moved from one mining location to another within the same pit over the years or even frequently. Thus besides a fixed immobile support structure also mobile or semi-mobile support structures are usual.

Disadvantageously within this state of the art is that known gearless motor solutions for mining conveyor belt drive systems are extremely heavy weighted. Especially an arrangement on a support structure will require a significant effort for steel work in order to make it suitable to wear the respective heavy weights of the motors, which might amount inbetween 20t and 150t and above per motor. Also a moving of a heavy weighted mining conveyor belt drive system from one location to another requires a significant effort for balancing the mobile drives station for propelling respectively demounting and re-assembling.

Objective of the invention is to provide a mining conveyor belt drive system with reduced weight and size, so that on one side less steel work is required for a respective support structure and that on the other side propelling respectively demounting and re-assembling is facilitated.

The problem is solved by a mining conveyor belt drive system of the aforementioned kind. This is characterized by a at least one respective low speed permanent-magnet excited synchronous motor on one or both ends of the shaft, which each is equipped to directly drive the shaft without any gear transmission inbetween. According to a preferred variant of the invention the at least one respective permanent-magnet excited synchronous motor is shaft-mounted with a respective torque-arm so that further bearings of the shaft are avoided. But also a food mounted motor with flexible coupling is possible as well.

Basic idea of the invention is to make a mining conveyor belt drive system less heavy weighted and more robust by using a permanent-magnet excited synchronous motor. An external excitation of a synchronous motor is avoided therewith and a respective rectifier for excitation can be avoided in an advantageous way. The overall size and weight of a permanent-magnet excited synchronous motor is smaller compared with an external excited synchronous motor and electrical losses will be reduced due to the excitation by permanent-magnets. Thus also the effort for a respective cooling system can be reduced and the weight and dimensions of the mining conveyor belt drive system according to the invention are reduced once again. The use of permanent magnets reduces on one side the flexibility of controlling a respective synchronous motor, on the other side such a degree of flexibility is not required in the technical field of driving a conveyor belt in mining industry.

In order to avoid a gearbox or the like at all, the permanent-magnet excited synchronous motor according to the invention comprises a larger number of poles, for example 24 or 48. Thus the rated rotational speed and the weight are reduced to a level which allows the direct flanging of the shaft of the motor with the shaft of the driving pulley. Due the increased diameter of such a permanent-magnet excited synchronous motor the axial length can become reduced which makes the mining conveyor belt drive system smaller in an advantageous way.

A further reduction of the size and weight of the drive train in total is gained by a shaft-mounting of the permanent-magnet excited synchronous motor with a respective torque arm. No motor base frame is needed in this case so that once again the weight and size of the system is reduced therewith. Here the whole weight of a synchronous motor is supported by the shaft of the synchronous motor respectively the shaft of the driving pulley which are flanged together to the drive train. Only a respective torque arm and respective support for the torque arm has to be foreseen, which prevents a rotating movement of the stator of the respective permanent-magnet excited synchronous motor. A symmetrical arrangement of two permanent-magnet excited synchronous machines equalizes the burden of the two bearings of the flanged shafts. Of course, the synchronous motors themselves comprise bearings for their shaft, but the whole flanged shaft of the driving pulley shaft and the shafts of the synchronous motors is seated with only the two bearings of the driving pulley.

The combination of the aforementioned features and especially the use of a permanent-magnet excited synchronous motor afford an appreciable reduction of dimension and weight of a mining conveyor belt drive system in an advantageous way. Thus steelwork for a support structure is reduced respectively the demounting and mounting of a mining conveyor belt drive system is facilitated therewith.

According to a preferred embodiment of the invention the mining conveyor belt drive system the driving pulley and the at least one permanent-magnet excited synchronous motor are mounted on a common support structure as part of the system so that they are elevated above ground level therewith. The effort for the support structure can become advantageously reduced due to the reduced weight of the aforementioned components. Thus this embodiment is also characterized by a light-weight support structure.

According to another embodiment of the invention the support structure is at least predominantly made of steel beams. Steel beams have an excellent mechanical stability and are very suitable for a lattice construction.

According to a further embodiment of the invention the mining conveyor belt drive system comprises means to become moved from one temporary location to another temporary location. Demounting and mounting a mining conveyor belt drive system for changing its location requires significant effort. Respective movement means such as a caterpillar drive or crawler at the bottom of for example a support structure enables an easier movement of such a system from one location to another. It is also possible to demount such a system only in part and to move the component groups accordingly and mount them at the new location.

According to a further embodiment of the invention the mining conveyor belt drive system comprises means to become anchored at a temporary location. A driving pulley for a conveyor belt is subject to high tension forces. Especially when mounted on a support structure a torque is applied thereon. To withstand those forces a tensioning rope and/or a ground anchor are foreseen for example, which can easily mounted and demounted.

According to another embodiment of the invention the system further comprises at least one further driveless pulley for deflecting the conveyor belt. As mentioned before, a driving pulley is typically located at the upper end of the conveyor belt line. Thus the conveyor belt has to be turned around by 180° at this location. Further driveless pulleys can be used for example to apply a defined tension force on the conveyor belt or to increase the angle in which the driving pulley is enclosed by the conveyor belt in order to gain a better traction.

According to a further embodiment of the invention mining conveyor belt drive system the permanent-magnet excited synchronous motors have each a rated power within the range of 500kW to 10MW. Thus two of them provide sufficient power to drive a typical conveyor belt in mining industry, which requires for example 1 MW for smaller installations or 20MW for larger installations at one pulley.

According to a further embodiment of the invention the at least one permanent-magnet excited synchronous motor has a rated rotation speed within the range of 25 to 200 rpm. Dependent on the diameter of a respective driving pulley this is a rotational speed, which allows the direct flanging of the shafts of the motors and the driving pulley, so that a gearbox or any other any other gear transmission inbetween can be avoided in an advantageous way.

According to a preferred embodiment of the invention the number of poles of the permanent-magnet excited synchronous motors is in the range of 16 to 72. This number is suitable to reduce the rotational speed of the motors to the desired range for avoiding a gear mechanism. A variable frequency drive such as a frequency converter can drive the permanent-magnet excited motor in a common / comfortable stator frequency range without derating.

According to another embodiment of the mining conveyor belt drive system cooling elements such as fins or ribs are foreseen on the outer surface of the permanent-magnet excited synchronous motors in order to increase the area for heat exchange. The operational losses of a permanent-magnet excited synchronous machine is lower compared with an external excited synchronous machine. Thus the need for cooling a permanent-magnet excited synchronous motor is also reduced. In order to avoid or at least to reduce the size of an active external cooling system the cooling surface is increased by the cooling elements in an advantageous way. Preferably an internal cooling circuit is avoided so that no cooling liquid such as air is blown into the permanent-magnet excited motor which eliminates the need of a heat exchanger. This is advantageous in dusty environment such is mining.

According to a further embodiment of the invention blowing means for a forced cooling to the outer surface of the permanent-magnet excited synchronous motors are foreseen. Even the electrical losses of a permanent-magnet excited synchronous machine are low an active cooling system might be advantageous in some cases.

According to another embodiment of the invention the permanent-magnet excited synchronous motors are encapsulated so that they are dust proof. This increases their reliability in a rough working environment like in mining systems.

According to a further embodiment of the invention at least a second drive pulley with respective shaft mounted permanent-magnet excited synchronous motors is foreseen for driving the same conveyor belt. Dependent on the given frame condition this is useful to increase the force applicable on the conveyor belt respectively to limit the size of the permanent-magnet excited synchronous machines if beneficial.

According to a preferred embodiment of the invention the mining conveyor belt drive system is built modular wherein the respective modules are nondestructive demountable. This enables the demounting and mounting of such a system in an advantageous way. If applicable, a preferred size of a module might correspond to a standardized container size as 40feet (12,2m). A transport of such a module with standardized means of transportation such as trucks or so is simplified therewith.

According to a further embodiment of the invention a floating support structure is foreseen to take over a part of the weight of the at least one permanent-magnet excited synchronous motor. This can be realized for example by the torque-arm itself, which might take over 20-30% of the weight of the motor. The load on the drive train is reduced therewith in an advantageous way.

Further advantageous embodiments of the invention are mentioned in the dependent claims.

The invention will now be further explained by means of an exemplary embodiment and with reference to the accompanying drawings, in which:
- Figure 1: shows an exemplary low speed permanent-magnet excited synchronous motor,
- Figure 2: shows an exemplary first conveyor belt drive system,
- Figure 3: shows a second exemplary conveyor belt drive system and
- Figure 4: shows an exemplary conveyor belt drive system with support structure.

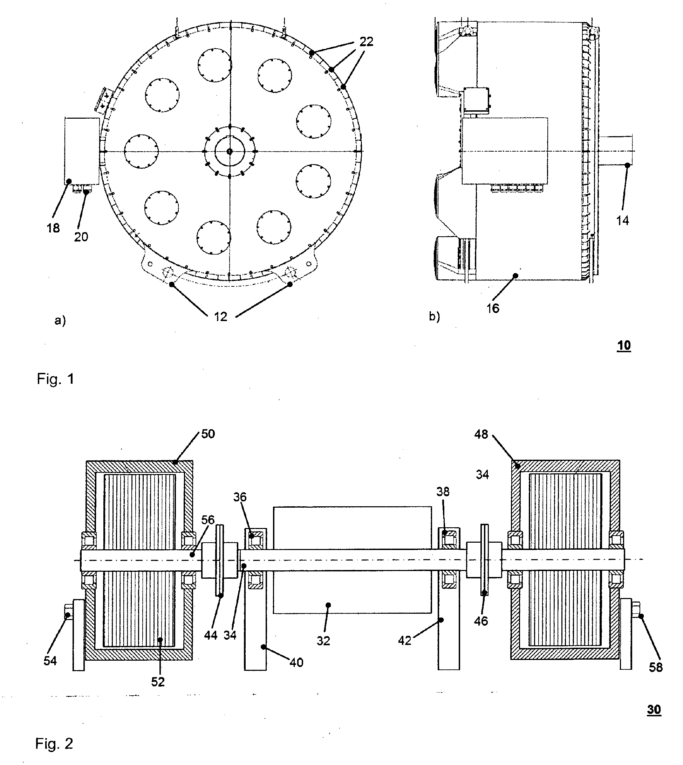

Figure 1 shows an exemplary low speed permanent-magnet excited synchronous motor in a sketch 10a) (*top view*) and 10b) (*side view*). The permanent-magnet excited synchronous motor 10 comprises a cylindrical motor case 16 with interfering points 12 for a torque-arm and an electrical connection box 18 with electrical connectors 20 at the radial outer surface. The interfering points 12 are foreseen to prohibit a rotation of the stator of the motor 10 around its motor shaft 14, so that a torque is applicable thereon.

The motor 10 is foreseen for shaft mounting, so that the whole weight of the motor is worn by the shaft 14, which is foreseen to become flanged together with the shaft of a not shown driving pulley. At the outer edge of the motor case 16 the ends of the stator winding 22 are shown. As can be seen from the large number of turns of the stator winding 22, several poles are foreseen in order to reduce the rotational speed of the motor 10.

Figure 2 is showing an exemplary first conveyor belt drive system 30. A cylinder-like driving pulley 32 is attached on a shaft 34, which is pivot-mounted on both sides by bearings 36, 38, which themselves are worn by respective mounting elements 40, 42, which could be for example part of a not shown support structure. At both ends of the shaft 34 respective shaft flanges 44, 46 are foreseen for flanging permanent-magnet driven synchronous motors 48, 50 thereon. The synchronous motors 48, 50 comprise a radial inner rotor 52 and an interfering point 54 for a not shown torque-arm and a motor shaft 56. The inner rotor 52 is encapsulated by the stator.

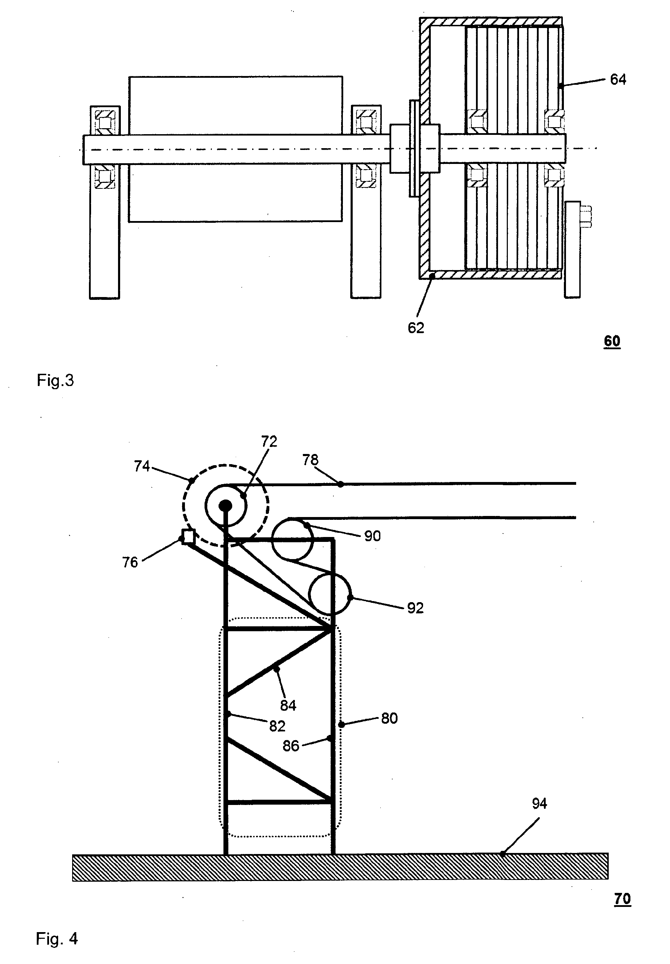

Figure 3 is showing an exemplary second conveyor belt drive system 60. In comparison to Fig. 2 a permanent-magnet excited synchronous motor is flanged only on one side. Furthermore the flanged motor has a radial outer rotor 62 and a radial inner stator 64.

Figure 4 is showing an exemplary conveyor belt drive system with support structure in a sketch 70. A cylinder-like driving pulley 72 is mounted on the top of a support structure 80, for example in a height of 30m above ground level 94. The support-structure 80 is predominantly made from steel beams 82, 84, 86.

The driving pulley 72 is driven by a low-speed permanent magnet-excited synchronous motor 74, which is flanged on the shaft of the driving pulley 72. An interfering point 76 for a torque-arm is foreseen at the case of synchronous motor 74 in order to prevent a rotation of its stator during operation. A conveyor belt 78 is guided around the driving pulley 72 and two further driveless pulleys 90, 92, so that it is diverted by 180° by those pulleys.

### List of reference signs

- 10: exemplary low speed permanent-magnet excited synchronous motor
- 12: interfering point for torque-arm
- 14: motor shaft
- 16: motor case
- 18: electrical connection box
- 20: electrical connectors
- 22: stator winding
- 30: first exemplary conveyor belt drive system
- 32: cylinder-like driving pulley
- 34: shaft of driving pulley
- 36: first bearing of shaft of driving pulley
- 38: second bearing of shaft of driving pulley
- 40: mounting element of first bearing
- 42: mounting element of second bearing
- 44: first shaft flange
- 46: second shaft flange
- 48: first low speed permanent-magnet excited synchronous motor
- 50: second low speed permanent-magnet excited synchronous motor
- 52: rotor with permanent-magnets
- 54: interfering point for torque-arm
- 56: motor shaft
- 60: second exemplary conveyor belt drive system
- 62: stator
- 64: rotor
- 70: exemplary conveyor belt drive system with support structure
- 72: cylinder-like driving pulley
- 74: low speed permanent-magnet excited synchronous motor
- 76: interfering point for torque-arm
- 78: conveyor belt
- 80: support structure
- 82: first beam
- 84: second beam
- 86: third beam
- 90: first driveless pulley
- 92: second driveless pulley
- 94: ground level

## Claims

1. Mining conveyor belt drive system (30, 60, 70) comprising at least one cylinder-like driving pulley (32, 72) with a shaft (34) and respective bearings (36, 38) on both sides for driving a conveyor belt (78),
**characterized by**
• at least one respective low speed permanent-magnet excited synchronous motor (10, 48, 50, 74) on one or both ends of the shaft (34), which each is equipped to directly drive the shaft (34) without any gear transmission inbetween.

2. Mining conveyor belt drive system according to claim 1, **characterized in that** the at least one permanent-magnet excited synchronous motor (10, 48, 50, 74) is shaft-mounted with a respective torque-arm so that further bearings of the shaft are avoided.

3. Mining conveyor belt drive system according to claim 1 or 2, **characterized in that** the driving pulley (32, 72) and the at least one permanent-magnet excited synchronous motor (10, 48, 50, 74) is mounted on a common support structure (80) as part of the system so that it is elevated above ground level (94) therewith.

4. Mining conveyor belt drive system according to claim 3, **characterized in that** the support structure (80) is at least predominantly made of steel beams (82, 84, 86).

5. Mining conveyor belt drive system according to claim 3 or 4, **characterized in that** it comprises means to become moved from one temporary location to another temporary location.

6. Mining conveyor belt drive system according to claim 5, **characterized in that** it comprises means to become anchored at a temporary location.

7. Mining conveyor belt drive system according to any of the proceeding claims, **characterized in that** it comprises at least one further driveless pulley (90, 92) for deflecting the conveyor belt (78).

8. Mining conveyor belt drive system according to any of the proceeding claims, **characterized in that** the at least one permanent-magnet excited synchronous motor (10, 48, 50, 74) has each a rated power within the range of 500kW to 10MW.

9. Mining conveyor belt drive system according to any of the proceeding claims, **characterized in that** the at least one permanent-magnet excited synchronous motor (10, 48, 50, 74) has each a rated rotation speed within the range of 25 to 200 rpm.

10. Mining conveyor belt drive system according to any of the proceeding claims, **characterized in that** the number of poles of the at least one permanent-magnet excited synchronous motor (10, 48, 50, 74) is in the range of 16 to 72 or even higher.

11. Mining conveyor belt drive system according to any of the proceeding claims, **characterized in that** cooling elements such as fins or ribs are foreseen on the outer surface of the at least one permanent-magnet excited synchronous motor (10, 48, 50, 74) in order to increase the area for heat exchange.

12. Mining conveyor belt drive system according to any of the proceeding claims, **characterized in that** blowing means for forced cooling the outer surface of the at least one permanent-magnet excited synchronous motor (10, 48, 50, 74) are foreseen.

13. Mining conveyor belt drive system according to any of the proceeding claims, **characterized in that** the at least one permanent-magnet excited synchronous motor (10, 48, 50, 74) is encapsulated so that it is dust proof.

14. Mining conveyor belt drive system according to any of the proceeding claims, **characterized in that** at least a second drive pulley with at least one respective permanent-magnet excited synchronous motor (10, 48, 50, 74) is foreseen for driving the same conveyor belt (78).

15. Mining conveyor belt drive system according to any of the proceeding claims, **characterized in that** the system is built modular wherein the respective modules are nondestructive demountable.

16. Mining conveyor belt drive system according to any of the proceeding claims, **characterized in that** a floating support structure is foreseen to take over a part of the weight of the at least one permanent-magnet excited synchronous motor (10, 48, 50, 74).
